# EUROPEAN PATENT SPECIFICATION

(11) **EP 1 491 403 B1**
(45) Date of publication and mention of the grant of the patent: **14.10.2009**
(21) Application number: 04013875.2
(22) Date of filing: 14.06.2004
(51) Int. Cl.: B60Q 1/26

(54) **A device for installing sets of lights on a vehicle body**
Eine Vorrichtung für Installation der Lichter-Sätze auf einen Fahrzeugaufbau
Un dispositif pour installer des ensembles de lampes sur un carrosserie de véhicule

(30) Priority: 26.06.2003 IT TO20030485
(43) Date of publication of application: 29.12.2004
(73) Proprietor: Olsa S.p.A., 10090 Rivoli (IT)
(72) Inventor: Bosco, Eugenio, 10090 Rivoli (Torino) (IT)
(74) Representative: Lotti, Giorgio

(56) References cited:
- EP-A- 1 050 432
- DE-C1- 19 511 137
- SI-A- 20 201

## Description

The present invention relates to a device for installing sets of lights on a vehicle body.

In general, assembly devices for fixing sets of lights on a vehicle body must guarantee a water-tight seal between a rim of the set of lights and the vehicle body, and comprise a bracket fixed to the set of lights, a snap-action fastener slidably coupled to the bracket, and an expansion spring set between the bracket and the snap-action fastener to pull the snap-action fastener and the bracket towards one another and, consequently, to compress the rim of the set of lights against the vehicle body.

In general, the set of lights is pre-assembled on the vehicle body by partially inserting the snap-action fastener inside a through hole obtained through the vehicle body, and then the set of lights is installed definitively by inserting the snap-action fastener altogether through the hole via a manual operation, during which the projecting portion of the snap-action fastener is pulled until the fastener itself snaps setting the spring in compression and exerting, at the same time, a pre-load on the rim of the set of lights against the vehicle body.

Although the assembly devices of the type described above perform their function very well, the aforementioned manual operation for setting the fastener in tension proves relatively expensive at least in terms of labour costs, as well as in terms of production times.

An assembly device according to the preamble of claim 1 is disclosed in EP 1 050 432.

The purpose of the present invention is to provide an assembly device for sets of lights, which will enable an economic and fast installation of a set of lights on a vehicle body.

According to the present invention, an assembly device for sets of lights according to claim 1 is provided.

The invention will now be described with reference to the annexed drawings, which illustrate a non-limiting example of embodiment thereof, and in which:
- Figure 1 is a perspective view of a preferred embodiment of the assembly device for sets of lights of the present invention in a pre-assembly operative position;
- Figure 2 is a perspective view of the device of Figure 1 in an operative assembly position; and
- Figure 3 is an exploded perspective view of the device of Figure 1.

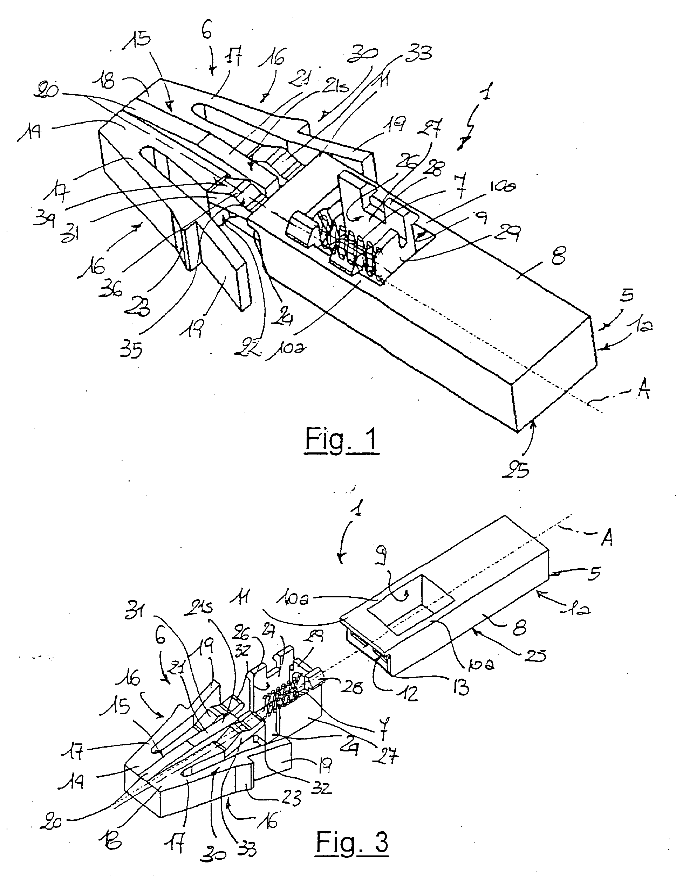

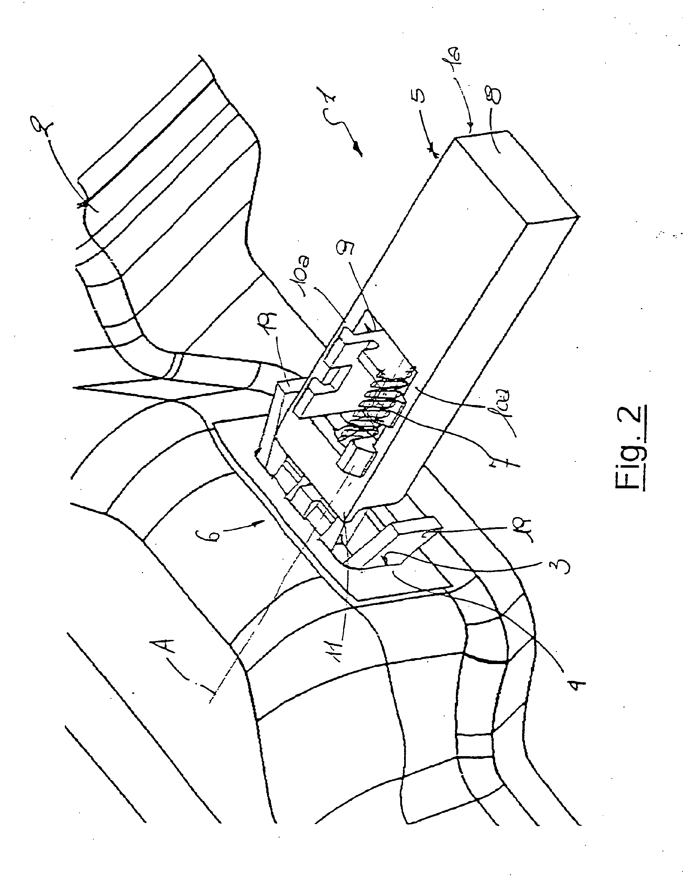

With reference to Figures 1 and 2, the reference number 1 designates, as a whole, an assembly device for sets of lights, which are known and are schematically designated by the reference 1a, to a vehicle body 2 of a motor vehicle (not illustrated).

The device 1 is designed to guarantee a water-tight seal between the set of lights 1a and the vehicle body 2, and can be inserted by snap-action inside a through hole 3, which is made through the vehicle body 2 itself, and is delimited by a peripheral edge 4 of a substantially rectangular shape. The device 1 has a longitudinal axis A, and comprises a bracket 5 fixed to the set of lights 1a, a snap-action fastener 6 slidably coupled to the bracket 5 to slide in the direction of the axis A, and a spring 7 set between the bracket 5 and the fastener 6 to exert a force of assembly between the fastener 6 and the bracket 5 directed along the axis A, pulling the fastener 6 and the bracket 5 themselves towards one another, i.e., pressing the set of lights 1a towards and against the vehicle body 2. According to what is illustrated in Figure 3, the bracket 5 comprises a parallelepipedal body 8 extending in the direction of the axis A starting from the set of lights 1a, and an undercut 9 with rectangular cross section, which is obtained through the body 8 in the proximity of a free end of the body 8 itself, and is delimited by two side walls 10a set on opposite sides of the axis A, and by a diaphragm 10 set transverse to the axis A and to the walls 10a themselves.

The diaphragm 10 is overlaid by a projecting moulding 11 set transverse to the axis A, and is provided with two slits 12, which are set on opposite sides of the axis A itself and are set in a position underneath the moulding 11 so as to define, on the diaphragm 10 itself, a front contrast surface 13.

The snap-action fastener 6 comprises a flattened central body 14 extending in the direction of the axis A, a partition 15 set along the axis A in an intermediate position with respect to the body 14 itself and defining a plane of symmetry for the fastener 6, and two toothed elastic fingers 16, which are set on opposite sides of the body 14, and have one respective fixed end 17 joined to the body 14 in a position corresponding to a head 18 of the body 14 and a respective free end 19 designed to oscillate elastically away from and towards the body 14 itself.

The partition 15 has, on each side of the body 14, a portion 20, which is tapered towards the head 17, and a partially projecting portion 21, which is axially contiguous to the corresponding portion 20 and is also fixed to the other portion 21.

Each portion 21 extends from the body 14 starting from a truncating surface 22 of the body 14 itself, in front of which it joins with the other portion 21, and is delimited outwards by a plane surface 21s, the distance of which from the other plane surface 21s is substantially equal to the height of the hole 3.

Each finger 16 is further provided with a wedge-shaped cam 23, which is set outside between the two ends 17 and 19 and is designed to co-operate with the edge 4 both to bend the corresponding finger 16, so enabling insertion of the fastener 6 into the hole 3, and to clamp the fastener 6 itself inside the hole 3. Each wedge-shaped cam 23 has a respective thickness of an increasing value starting from the end 17 and identifies, on the corresponding finger 16, a disengagement tab, which coincides with the end 19 and is designed to remain on the outside of the edge 4 to enable, once pressed in the direction of the axis A, disengagement of the fastener 6 from the hole 3.

The fastener 6 further comprises a bottom plate 24, which is fixed to the body 14 and extends from the body 14 itself along the axis A in an intermediate position between the two fingers 16 to slide on a side 25 of the body 8 and set itself so as to close partially a side of the undercut 9.

The fastener 6 finally comprises a seat 26, which is fixed to the plate 24, and is inserted inside the undercut 9 to contain the spring 7.

In particular, the seat 26 comprises two side walls 27, which face one another and each of which is provided with respective pairs of flexible catches 28, and an end wall 29, which is fixed and set transverse to the walls 27, and is set transverse to the axis A. The seat 26 is inserted in the undercut 9 with the catches 28 set up against the walls 10a and with the walls 27 set in contact with the walls 10a themselves, and is designed to slide axially in the direction of the axis A against the action of the spring 7, the opposite ends of which are consequently compressed by the wall 29 and by the diaphragm 10 to contrast any action causing movement of the fastener 6 away from the bracket 7.

Finally, the device 1 comprises a pre-assembly mechanism 30, which is set between the fastener 6 and the bracket 7 to clamp the fastener 6 in a pre-assembly position, in which the spring 7 is compressed and exerts a pre-assembly force having a value greater than the value of the assembly force, and is designed to be deactivatable mechanically and automatically upon introduction of the fastener 6 in the hole 3. Furthermore, in the pre-assembly position, the fastener 6 is at a given pre-assembly distance and in a position relatively far away from the bracket 5, whilst, in the assembly position, the fastener 6 is not only at an assembly distance smaller than the pre-assembly distance, but is also inserted inside the hole 3 with its own cams 23 gripping against the edge 4.

The mechanism 30 comprises two flexible spacer elements 31, which are fixed to the fastener 6 and are passively mobile between a pre-assembly position (illustrated in Figure 1), in which the elements 31 are positioned bearing upon the surface 13 of the bracket 5, and an assembly position (illustrated in Figure 2), in which the elements 31 are positioned inside the diaphragm 10 through the slits 12.

The two elements 31 are set on opposite sides of the portion 21 of the diaphragm 15 and on an opposite side of the plate 24 with respect to the body 14, and each is defined by respective shaped rods extending parallel to the axis A and fixedly to the body 14 starting from the surface 22 of the body 14 itself.

Each element 31 comprises a respective chamfered free end 32 and a respective double-wedge-shaped cam 33 delimited on the outside by two inclined planes 34 and 35 with opposite inclinations, which define between them a crown 36, and of which the inclined plane 34 is a deactivation plane designed to co-operate with the edge 4 of the hole 3 for deactivating the mechanism 30, whilst the inclined plane 35 is a lead-in plane, which is tapered towards the corresponding end 32 and is designed to co-operate with the moulding 11 to facilitate entry of the corresponding element 31 into the slit 12.

In particular, in its own pre-assembly position, each element 31 is positioned with the corresponding cam 33 set projecting with respect to the surface 21s, and is substantially fitted with its own end 32 against the surface 13 of the diaphragm 10 and the moulding 11, on account of the elastic action of the spring 7, which has in its own resting position an elongation greater than the elongation that it has both in the assembly position and in the pre-assembly position.

Transition of each element 31 into its own assembly position occurs following upon introduction of the fastener 6 into the hole 3 and interference of the surface 4 with each double-wedge-shaped cam 32. Said interference causes the progressive lowering of each element 31 towards the plate 24 and the simultaneous displacement of the corresponding end 32 along the surface 13 until the end 32 itself enters the slits 12.

Once the elements 31 are inserted into the slits 12, also the fastener 6 will be axially blocked with its own cams 23 up against the edge 4, and the spring 7 will be able to exert its own elastic force so as to pull the fastener 6 and the bracket 5 towards one another causing the set of lights 1a to adhere perfectly to the vehicle body 2.

From the foregoing description, it emerges clearly that the presence of the mechanism 30 enables assembly of the set of lights 1a to the vehicle body 2 to be rendered altogether automatic and particularly reliable, without, on the other hand, requiring the least manual intervention to force the spring 7 to values of compression such as to guarantee perfect adherence of the set of lights 1a on the vehicle body 2.

Furthermore, the possibility of pre-loading the spring 7 with a pre-assembly force of a given value also enables a certain freedom of positioning along the axis A of the crown 36 of the cam 33 with respect to positioning of the cams 23 again along the axis A so as to ensure at all times both clamping of the fastener 6 and a tight seal between the set of lights 1a and the vehicle body 2.

It is understood that the invention is not limited to the embodiment described and illustrated herein, which is to be considered merely as an example of embodiment of the assembly device for sets of lights, it being instead possible for said device to undergo further modifications regarding shapes and arrangement of parts, and constructional and assembly details.

## Claims

1. An assembly device (1) for sets of lights, the device (1) comprising: a bracket (5) fixed to the set of lights (1a); a snap-action fastener (6) slidably coupled to the bracket (5); and elastic means (7) set between the bracket (5) and the snap-action fastener (6) to exert a force of assembly between the snap-action fastener (6) and the bracket (5); pre-assembly means (30) set between the snap-action fastener (6) and the bracket (5) for clarping the snap-action fastener (6) in a pre-assembly position, in which the elastic means (7) exert a force of pre-assembly having a value greater than the value of the force of assembly, the pre-assembly means (30) being mechanically deactivatable upon assembly of the snap-action fastener (6),
**characterized in that** said pre-assembly means (30) comprise at east one flexible spacer element (31) fixed to the snap-action fastener (6) and passively mobile between a pre-assembly position, in which it is set bearing upon the bracket (5), and an assembly position, in which it is set in a seat (12) obtained within of the bracket (5) itself.

2. The device according to Claim 1, **characterized in that** said flexible spacer element (31) comprises an inclined plane (34) of deactivation designed to no-operate with an internal edge (4) of a hole (3) for housing the snap-action fastener (6) for deactivating the pre-assembly means (30).

3. The device according to Claim 2, **characterized in that** said flexible spacer element (31) comprises a lead-in inclined plane (35), which has an inclination opposite to that of the inclined plane (34) of deactivat on for facilitating entry of the spacer element (31) itself into the seat (12) .

4. The device according to Claim 3, **characteized in that** said bracket (5) comprises a front contrast wall (10), which is set transverse to a longitudinal axis (A) of the device (1) itself, and is provided with a through hole (12) defining the seat (12) for said spacer element (31).

5. The device according to Claim 4, **characterized in that** said bracket (5) comprises a projecting moulding (1a), which extends from the front contrast wall (10) towards the snap-action fastener (6), and defines with the through hole (12) a front contrast surface (13) for said flexible spacer element (31).

6. The device according to Claim 5, **characterized in that** said snap-action fastener (6) comprises a central body (14) extending along said longitudinal axis (A), and two toothed elastic fingers (16) joined to the central body (14), and set on opposite sides of the central body (14); the flexible spacer element (31) extending from the central body (14) parallel to the longitudinal axis (A).

7. The device according to Claim 6, **characterized in that** said pre-assembly means (30) comprise twc flexible spacer elements (31), which are fixed to the snap-action fastener (6), and extend from the central mody (14) parallel to the longitudinal axis (A); the bracket (5) comprising a seat for each spacer element (31).

8. The device according to Claim 7, **characterized in that** the snap-action fastener (6) comprises two plane surfaces (21s), which are set on opposite sides of said central body (14) and in a position intermediate between said spacer elements (31) at a distance apart from one another substantially equal to the height of said hole (3); said spacer elements (31) protruding with respect to one of said two plane surfaces (21s) in the respect ve pre-assembly positions.

## Patentansprüche

1. Montagevorrichtung (1) für Lichtersätze, wobei die Vorrichtung (1) umfasst: einen Halter (5), der an dem Lichtersatz (1a) befestigt ist; eine Schnappverschlussvorrichtung (6), die gleitend an den Halter (5) gekoppelt ist; und ein elastisches Mittel (7), das zwischen dem Halter (5) und der Schnappverschlussvorrichtung (6) eingesetzt ist, um eine Montagekraft zwischen der Schnappverschlussvorrichtung (6) und dem Halter (5) auszuüben; ein Vormontagemittel (30), das zwischen der Schnappverschlussvorrichtung (6) und dem Halter (5) zum Festklemmen der Schnappverschlussvorrichtung (6) in einer Vormontageposition eingesetzt ist, in der das elastische Mittel (7) eine Vormontagekraft mit einem größeren Wert als dem Wert der Montagekraft ausübt, wobei das Vormontagemittel (30) nach der Montage der Schnappverschlussvorrichtung (6) mechanisch deaktivierbar ist;
**dadurch gekennzeichnet, dass** das Vormontagemittel (30) mindestens ein flexibles Abstandshalterelement (31) umfasst, das an der Schnappverschlussvorrichtung (6) befestigt und passiv zwischen einer Vormontageposition, in der es gegen den Halter (5) liegend eingesetzt ist, und einer Montageposition, in der es in einem Sitz (12) eingesetzt ist, der innerhalb des Halters (5) selbst erhalten wird, beweglich ist.

2. Vorrichtung nach Anspruch 1, **dadurch gekennzeichnet, dass** das flexible Abstandshalterelement (31) eine geneigte Deaktivierungsebene (34) umfasst, die dazu ausgebildet ist, mit einer Innenkante (4) eines Lochs (3) zur Aufnahme der Schnappverschlussvorrichtung (6) zusammenzuwirken, um das Vormontagemittel (30) zu deaktivieren.

3. Vorrichtung nach Anspruch 2, **dadurch gekennzeichnet, dass** das flexible Abstandshalterelement (31) eine geneigte Einführungsebene (35) umfasst, deren Neigung jener der geneigten Deaktivierungsebene (34) entgegen gesetzt ist, um den Eintritt des Abstandshalterelements (31) selbst in den Sitz (12) zu erleichtern.

4. Vorrichtung nach Anspruch 3, **dadurch gekennzeichnet, dass** der Halter (5) eine vordere Kontrastwand (10) umfasst, die quer zu einer Längsachse (A) der Vorrichtung (1) selbst eingerichtet ist und mit einem Durchgangsloch (12) bereitgestellt ist, das den Sitz (12) für das Abstandshalterelement (31) definiert.

5. Vorrichtung nach Anspruch 4, **dadurch gekennzeichnet, dass** der Halter (5) eine vorstehende Ausformung (1a) umfasst, die sich von der vorderen Kontrastwand (10) zu der Schnappverschlussvorrichtung (6) erstreckt und mit dem Durchgangsloch (12) eine vordere Kontrastfläche (13) für das flexible Abstandshalterelement (31) definiert.

6. Vorrichtung nach Anspruch 5, **dadurch gekennzeichnet, dass** die Schnappverschlussvorrichtung (6) einen zentralen Körper (14) umfasst, der sich entlang der Längsachse (A) erstreckt, und zwei gezahnte elastische Finger (16), die mit dem zentralen Körper (14) verbunden sind und an gegenüber liegenden Seiten des zentralen Körpers (14) eingerichtet sind; wobei sich das flexible Abstandshalterelement (31) von dem zentralen Körper (14) parallel zu der Längsachse (A) erstreckt.

7. Vorrichtung nach Anspruch 6, **dadurch gekennzeichnet, dass** das Vormontagemittel (30) zwei flexible Abstandshalterelemente (31) umfasst, die an der Schnappverschlussvorrichtung (6) befestigt sind und sich von dem zentralen Körper (14) parallel zu der Längsachse (A) erstrecken; wobei der Halter (5) einen Sitz für jedes Abstandshalterelement (31) umfasst.

8. Vorrichtung nach Anspruch 7, **dadurch gekennzeichnet, dass** die Schnappverschlussvorrichtung (6) zwei ebene Oberflächen (21s) umfasst, die an gegenüber liegenden Seiten des zentralen Körpers (14) und in einer Position unmittelbar zwischen den Abstandshalterelementen (31) mit Abstand zueinander im Wesentlichen gleich der Höhe des Loches (3) eingerichtet sind; wobei die Abstandshalterelemente (31) in Bezug auf eine der zwei ebenen Oberflächen (21s) in den entsprechenden Vormontagepositionen vorragen.

## Revendications

1. Dispositif d'assemblage (1) destiné à des jeux de feux, le dispositif (1) comprenant : un support (5) fixé sur le jeu de feux (1a) ; une attache à encliquètement (6) couplée à coulissement au support (5) ; et des moyens élastiques (7) prévus entre le support (5) et l'attache à encliquètement (6) afin d'exercer une force d'assemblage entre l'attache à encliquètement (6) et le support (5) ; un moyen de pré-assemblage (30) prévu entre l'attache à encliquètement (6) et le support afin de retenir l'attache à encliquètement (6) dans une position de pré-assemblage, dans laquelle le moyen élastique (7) exerce une force de pré-assemblage ayant une valeur supérieure à la valeur de la force d'assemblage, le moyen de pré-assemblage (30) pouvant être désactivé mécaniquement au moment de l'assemblage de l'attache à encliquètement (6),
**caractérisé en ce que** ledit moyen de pré-assemblage (30) comprend au moins un élément d'entretoise souple (31) fixé sur l'attache à encliquètement (6) et mobile passivement entre une position de pré-assemblage, dans laquelle il est agencé pour reposer sur le support (5), et une position d'assemblage dans laquelle il est agencé dans une embase (12) prévue à l'intérieur du support (5) lui-même.

2. Dispositif selon la revendication 1,
**caractérisé en ce que** ledit élément d'entretoise souple (31) comprend un plan incliné (34) de désactivation agencé pour coopérer avec un bord interne (4) d'un trou (3) destiné à recevoir l'attache à encliquètement (6), afin de désactiver le moyen de pré-assemblage (30).

3. Dispositif selon la revendication 2,
**caractérisé en ce que** ledit élément d'entretoise souple (31) comprend un plan incliné d'introduction (35), qui présente une inclinaison opposée à celle du plan incliné (34) de désactivation, afin de faciliter l'entrée de l'élément d'entretoise (31) lui-même dans l'embase (12).

4. Dispositif selon la revendication 3,
**caractérisé en ce que** ledit support (5) comprend une paroi frontale d'appui (10), qui est agencée transversalement à un axe longitudinal (A) du dispositif (1) lui-même, et est munie d'un trou traversant (12) définissant l'embase (12) pour ledit élément d'entretoise souple (31).

5. Dispositif selon la revendication 4,
**caractérisé en ce que** ledit support (5) comprend une partie moulée en saillie (la), qui s'étend à partir de la paroi frontale d'appui (10) vers l'attache à encliquètement (6), et définit avec le trou traversant (12) une surface frontale d'appui (13) pour ledit élément d'entretoise souple (31).

6. Dispositif selon la revendication 5,
**caractérisé en ce que** ladite attache à encliquètement (6) comprend un corps central (14) qui s'étend le long dudit axe longitudinal (A) et deux doigts élastiques dentés (16) reliés au corps central (14) et agencés sur des côtés opposés du corps central (14), l'élément d'entretoise souple (31) s'étendant à partir du corps central (14) parallèlement à l'axe longitudinal (A).

7. Dispositif selon la revendication 6,
**caractérisé en ce que** ledit moyen de pré-assemblage (30) comprend deux éléments d'entretoise souples (31), qui sont fixés sur l'attache à encliquètement (6), et s'étendent à partir du corps central (14) parallèlement à l'axe longitudinal A, le support (5) comprenant une embase pour chaque élément d'entretoise (31).

8. Dispositif selon la revendication 7,
**caractérisé en ce que** l'attache à encliquètement (6) comprend deux surfaces planes (21s), qui sont agencées sur des côtés opposés dudit corps central (14), et à une position intermédiaire entre lesdits éléments d'entretoise (31), à une distance l'une de l'autre qui est sensiblement égale à la hauteur dudit trou (3) ; lesdits éléments d'entretoise (31) faisant saillie par rapport à l'une desdites deux surfaces planes (21s) dans les positions respectives de pré-assemblage.
